# EUROPEAN PATENT SPECIFICATION

(11) **EP 1 990 953 B1**
(45) Date of publication and mention of the grant of the patent: **13.04.2011**
(21) Application number: 07702299.4
(22) Date of filing: 07.02.2007
(51) Int. Cl.: H04W 8/12, H04L 29/06, H04W 80/04

(54) **A METHOD AND DEVICE FOR DETERMINING HOME AGENT ATTACHED BY MOBILE NODE**
VERFAHREN UND VORRICHTUNG ZUR BESTIMMUNG EINES DURCH EINEN MOBILEN KNOTEN VERBUNDENEN HEIMAGENTEN
PROCÉDÉ ET DISPOSITIF PERMETTANT DE DÉTERMINER UN AGENT DE RATTACHEMENT RELIÉ À UN NOEUD MOBILE

(30) Priority: 01.03.2006 CN 200610034101
(43) Date of publication of application: 12.11.2008
(73) Proprietor: Huawei Technologies Co., Ltd., Longgang District, Shenzhen Guangdong 518129 (CN)
(72) Inventor: ZHANG, Jian, Guangdong Province 518129 (CN)
(74) Representative: Körber, Martin Hans
(86) International application number: PCT/CN2007/000421
(87) International publication number: WO 2007/098677

(56) References cited:
- EP-A- 1 777 908
- CN-A- 1 384 648
- CN-A- 1 642 348
- CN-A- 1 666 486
- US-A1- 2005 102 529
- US-B1- 6 765 892
- MOBILITY FOR IPV6 (MIP6) H TSCHOFENIG T TSENOV SIEMENS G GIARETTA TILAB J BOURNELLE GET/INT: "Diameter applicability for AAA-HA Interface in Mobile IPv6; draft-tschofenig-mip6-aaa-ha-diameter-00.t xt" IETF STANDARD-WORKING-DRAFT, INTERNET ENGINEERING TASK FORCE, IETF, CH, 11 July 2005 (2005-07-11), XP015040037 ISSN: 0000-0004

## Description

### FIELD OF THE INVENTION

The present invention relates to mobile communication network technology, and especially to a method and apparatus for determining home agent (HA) attached by mobile node.

### BACKGROUND

As data communication and wireless communication technologies advance rapidly and large number of mobile terminals such as a laptop computer, a personal digital assistant (PDA), a mobile phone and an in-vehicle device emerge, more and more users want to access Internet efficiently and flexibly without any time and space limitations. Internet needs not only to provide existing data services and multi-media audio and video services, but also to realize mobile Internet function, to provide mobile users with wireless Internet access services. Mobile IP is a technology supporting interconnection between mobile users and Internet that is developed to accommodate this requirement, and it enables a user's host to keep communication with Internet during moving, hence becoming a hot spot of study today.

Accessing Internet with various mobile devices such as laptop computers and mobile phones would accelerate the exhaustion of IPv4 (Internet protocol version 4) addresses. However, IPv6 (Internet protocol version 6) will satisfy mobile Internet requirements with its advantages such as huge address space, support of mobile IP, QoS guarantee mechanism, security and automatic configuration of addresses and is the key to provide various new services.

The fundamental principle of mobile IP technology is to enable a mobile node to always use an original IP address for IP communication while moving so as to ensure that upper layer applications carried by IP network layer maintain uninterrupted and continuable during moving.

In the mobile IPv6 network, there are two modes for communication between a mobile node and a correspondent node, i.e. a bidirectional tunneling mode and a route optimization mode, the principles of the two modes are as follows:

1)In the bidirectional tunneling mode, data transmitted by the correspondent node to the mobile node is firstly forwarded to a mobile node home network of the mobile node and the home agent intercepts the data and handovers the data to the mobile node via a tunnel. The data transmitted by the mobile node to the correspondent node is firstly transmitted to the home agent via a reverse tunnel and the home agent forwards the data to the correspondent node. In this mode, it is not necessary for the correspondent node to support the mobile IPv6 protocol, that is, the correspondent node is not aware of change of the location of the mobile node and the mobile node need not to register its care-of address with the correspondent node.

2) In the route optimization mode, the mobile node registers its care-of address with the correspondent node. The correspondent node directly transmits the data transmitted to the mobile node to the care-of address registered by the mobile node and the data transmitted by the mobile node to the correspondent node does not pass through the home agent any longer. This communication mode may avoid adverse influence on the communication due to congestion and collapse of the home agent.

After the mobile node roams into another network, in order to guarantee continuity of the service, the mobile node needs to register its care-of address with the home agent to acquire support of mobile service. Each time the mobile node switches an access network, it needs to update the registered care-of address with the home agent. In practice, in order to effectively manage the mobile node, it is required to inquire status of the mobile node such as the care-of address of the mobile node and effective time of current binding. This inquiry operation will be used in services such as AAA authentication and authorization and care-of address-based location management. Description will be given below by taking the AAA authentication and authorization for the mobile node and the location service provided by the care-of address as examples.

The AAA authentication and authorization for the mobile node is as follows: the mobile node goes through authentication, authorization and accounting (AAA) when the mobile node uses mobile IPv6 services provided by a carrier, that is, the AAA server (i.e. the Home AAA server, AAAH) in the mobile node home network performs authentication and authorization as well as accounting and the AAA protocol may be RADIUS, Diameter, EAP and so on. After the authentication is passed, the mobile node is authorized to use mobile IPv6 services.

When the mobile node uses mobile IPv6 services normally, the AAAH server extracts periodically mobile IPv6 service status of the mobile node from the home agent (HA) associated with the mobile node. This is mainly to check regularly the mobile IPv6 service status of the mobile node and the operation may be divided into two steps: in the first step, AAAH needs to determine from which HA to extract the current mobile IPv6 service status of the mobile node because there is stateless in the mobile services and there may be multiple home agents in the mobile node home network; in the second step, once information on the home agency is acquired, AAAH interacts with the home agency to acquire the mobile IPv6 service status of the mobile node.

In existing solutions, the AAAH needs to interact directly with the mobile node to check the MIPv6 service status and the specific solution is as follows:

1. The AAAH server transmits the mobile node a re-authorization message to initiate a re-authorization process. Because the MIPv6 bootstrapping process is completely stateless , the AAAH server may not know the MIPv6 service status of the mobile node during the re-authorization, and thus the AAAH server uses an MIPv6-Authorization-TLV to carry Service-Status-TLV and optional Service-Options-TLV so as to transmit them to the mobile node.

The bootstrapping process is defined as a process that the mobile node acquires sufficient information to successfully register with a proper home agent. The information includes home address of the mobile node, address of the home agent and security association of the mobile node and the home agent.

2. If the MIPv6 service of the mobile node is not activated, the mobile node's bootstrapping process described in this solution is initiated. Otherwise, the mobile node responds with the MIPv6-Authorization-TLV message, and the response message includes Service-Selection-TLV indicating that the MIPv6 service is in use. At the same time, the response message further includes information such as Home-Agent-Address-TLV, Home-Address-TLV and IKE-Authentication-Options-TLV, to notify the AAAH server of the current status of the mobile node.

3. After receiving the response message returned by the mobile node, the AAAH server contact the home agency to check the mobile node's status on the home agency and update related status.

In the existing solutions, there are the following problems for the AAAH to directly interact with the mobile node to determine the home agency to which the mobile node attaches:

1. The AAAH is likely to be cheated and attacked by the mobile node, e.g. the mobile node provides a wrong home agency address in the response message, which causes the AAAH to fail to contact the home agency, resulting in poor security and attack resistance.

2. When the mobile node is roaming in a foreign network, interaction of messages between the AAAH and the mobile node needs to pass across one or more foreign networks, resulting in increased possibility of messages being intercepted, tampered, forged and attacked.

3. Because status of only one mobile node may be inquired every time, when more mobile nodes need to be inquired concurrently, loads on the AAAH server and links in the network are heavy.

Some documents in the art are briefly discussed hereinafter.

EP 1777908 A1 having a filing date prior to the present application but a publication date later than the filing date of the present application, is only to be considered as prior art in the sense of Article 54(3) EPC.

EP 1 777 908 A1 discloses a method comprising the steps of a first node sending to a first home node of a home network a request containing information about a home address of a mobile node at the first home node exists; the first home node receiving the request, said first home node comprising a stored binding table; determining whether the binding with said home address exists in any home node of the home network, the first node receiving a reply comprising the address of the home node with said binding.

US 2005/102529A1 is regarded as the closest prior art and discloses a method comprising the steps: the Home Agent is used to support "dynamic Home Agent allocation". During the initial authentication phase, the AAA infrastructure can allocate a Home Address and a corresponding Home Agent dynamically, every time a client session commences. A second gateway may either send a unicast message if it knows the identity of the gateway of the home network, or the second gateway can send a multicast message inquiring whether any of the other gateways has serviced this particular mobile node, which is now located at the second gateway.

US-B1-6 765 892 discloses methods and apparatus for optimizing IP multicast data transmission in a mobile IP environment.

### SUMMARY

To resolve the above technical problem, embodiments of the present invention provide a method for determining home agent attached by mobile node. The method includes steps of: receiving, by a home agent in a mobile node home network, an inquiry message, wherein the inquiry message is transmitted by an application service node for inquiring a home agent attached by a mobile node; and returning a response message to the application service node if the inquired mobile node is managed by the home agent; and, using a router solicitation message to notify other home agents in the mobile node home network if the inquired mobile node is not managed by the home agent.

Accordingly, embodiments of the present invention also provide a apparatus for determining home agent attached by mobile node which includes: means for receiving an inquiry message, wherein the inquiry message is transmitted by an application service node for inquiring a home agent attached by a mobile node; and means for returning a response message if the inquired mobile node is managed by the home agent; and means for using a router solicitation message to notify other home agents in the mobile node home network if the inquired mobile node is not managed by the home agent.

As can be seen from the technical solution disclosed above, embodiments of the present invention propose a new solution for an application service node to inquire home agent(s) attached by mobile node(s) to improve security of the network.

### BRIEF DESCRIPTION OF THE DRAWINGS

Fig. 1 is a flow chart showing the method for determining home agent attached by mobile node according to an embodiment of the present invention;

Fig. 2 is a schematic diagram showing specific signaling of the method of Fig. 1 for determining home agent attached by mobile node;

Fig. 3 is a flow chart showing the anycast address and RS/RA message solution used in the first embodiment of the present invention;

Fig. 4 is a flow chart showing the anycast address and RS message solution used in the second embodiment of the present invention;

Fig. 5 is a flow chart showing the multicast address solution used in the third embodiment of the present invention; and

Fig. 6 is a structural diagram showing the apparatus for determining home agent attached by mobile node according to an embodiment of the present invention.

### DETAILED DESCRIPTION

The present invention is further described below by reference to the accompanying drawings.

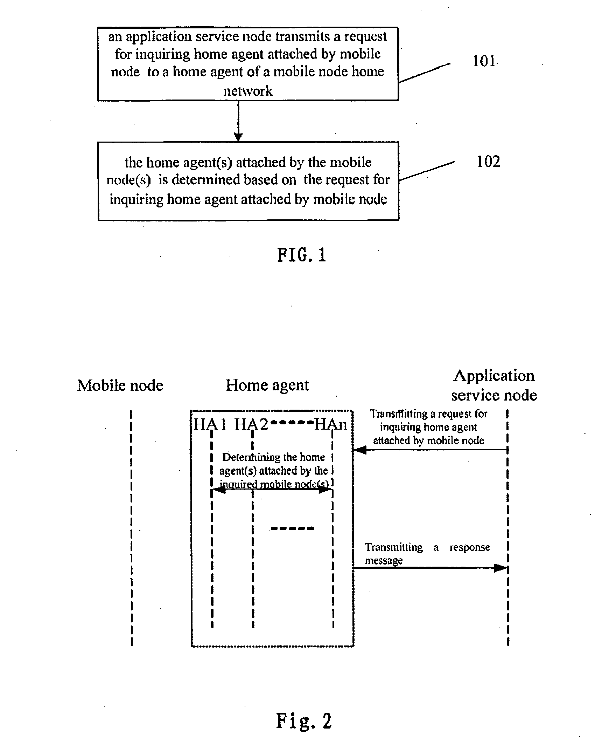

In order to improve efficiency and security, an embodiment of the present invention provides a method for determining home agent attached by mobile node. As shown in Fig. 1, the specific procedure includes the following steps:

Step 101: An application service node transmits a home agent of a mobile node home network a request message for inquiring home agent attached by mobile node;

Step 102: The home agent(s) attached by the mobile node(s) is determined based on the request message for inquiring home agent attached by mobile node.

The specific implementation of the method is shown in Fig. 2. In Fig. 2, the application service node (ASN) transmits a request message for inquiring home agent attached by mobile node (e.g. a portable computer, a mobile phone and the like) to at least one home agent (HA) of the mobile node home network (there may be a plurality of home agents in the mobile node home network for backup or load balancing), the request message being included information on a plurality of mobile nodes belonging to a same mobile node home network (step 201).

After receiving the request message, the at least one home agent determines the home agent(s) attached by the inquired mobile node(s) (step 202), and then transmits the application service node a response message including information on the mobile node(s) and information on the home agent(s) attached by the mobile node(s) (step 203).

With the above steps, the application service node may determine the home agent(s) attached by the mobile node(s). The application service node then interacts with the home agent(s) to determine mobile [Pv6 service status of the mobile node(s) and perform updates as required.

To facilitate those skilled in the art to understand, the present invention will be described below with respect to specific embodiments.

### Embodiment 1

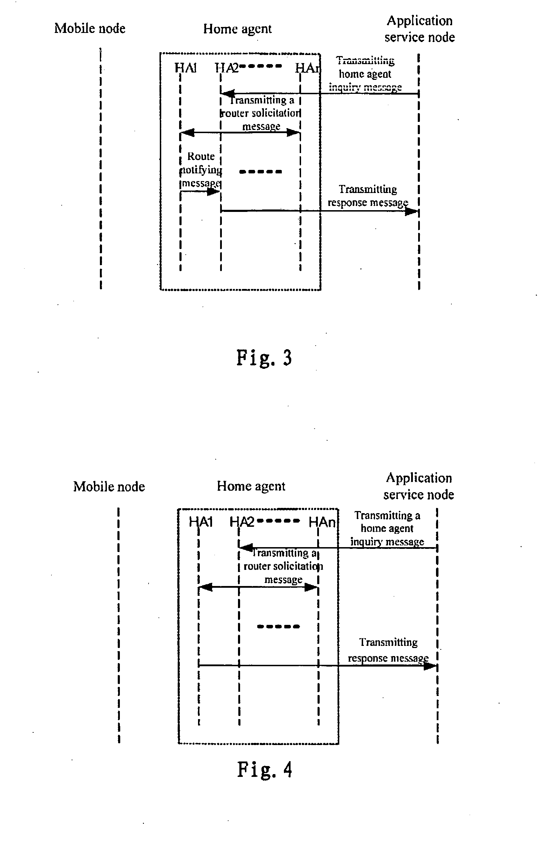

When an application service node (e.g. an AAAH server, a location server and the like) transmits an inquiry message to a home agent HA, a home agent's anycast address is used as the destination address. Thus, one home agent in the mobile node home network receives the inquiry message, and if the inquired mobile node(s) is managed by the home agent, the home agent directly returns a response message. Otherwise, the home agent uses a router solicitation message (RS message) to notify other home agents in the mobile node home network. After other home agents to which the mobile node attaches receive the RS message, they transmit a router advertisement message (RA message) to the home agent that receives the inquiry message. The home agent receives the returned RA response message and then transmits it to the application service node. The specific implementation process is shown in Fig. 3, which includes the following steps:

Step 301: The application service node transmits a home agent in the mobile node home network of a mobile node a message for inquiring a home agent. The message includes information on one or more mobile nodes to be inquired and the destination address of the message is a home agent's anycast address.

Step 302: Because the destination address of the message is the home agent's anycast address, one home agent in the mobile node home network will receive the message (for convenience of subsequent description, assuming the home agent is HA2 in Fig.3). After receiving the message, HA2 firstly check whether all mobile node(s) included in the message are managed by it (e.g. looking up whether there is the registration information on the mobile node(s) included in the message in the binding buffer of the home agent). If the inquired mobile node(s) is all managed by it, the home agent directly transmits a response message to the application service node. Otherwise, HA2 transmits a router solicitation message over a home link to notify other home agents in the mobile node home network.

Step 303: After receiving the router solicitation message, each of other home agents in the mobile node home network checks whether the inquired mobile node(s) is managed by it. If the check result indicates that the inquired mobile node(s) is not managed by it, the home agent conducts no processing. If the check result indicates that the inquired mobile node(s) is managed by it, the home agent transmits a router advertisement message RA to HA2 and the mobile node(s) managed by it is notified HA2 in the message RA.

Step 304: After receiving the message RA, HA2 transmits to the application service node a response message, and the response message includes information on the mobile node(s) and information on the home agent(s) attached by the mobile node(s).

### Embodiment 2

When the application service node (e.g. AAAH server, location server and the like) transmits an inquiry message to the home agent, a home agent's anycast address is used as the destination address. Thus, a home agent in the mobile node home network receives the inquiry message, and if the inquired mobile node(s) is managed by the home agent, the home agent directly returns a response message. Otherwise, the home agent uses a router solicitation message (RS message) to notify other home agents in the mobile node home network. After the home agent(s) attached by the mobile node(s) receives the RS message, it directly transmits a response message to the application service node. The specific implementation process is shown in Fig. 4, which includes the following steps:

Step 401: The application service node transmits a home agent in the mobile node's home network a home agent inquiry message that includes information on one or more mobile nodes to be inquired and the destination address of the inquiry message is a home agent's anycast address.

Step 402: A home agent in the mobile node home network will receive the inquiry message (for convenience of subsequent description, assuming it is HA2 in Fig.4) because the destination address of the inquiry message is a home agent's anycast address. After receiving the inquiry message, HA2 firstly check whether all the mobile node(s) in the inquiry message is managed by it. If there is any inquired mobile node managed by it, HA2 transmits a response message to the application service node. For mobile nodes not managed by it, HA2 transmits a router solicitation message over a home link to notify other home agents in the mobile node home network.

Step 403: After receiving the router solicitation message, each of the other home agents in the mobile node home network checks whether the inquired mobile node(s) is managed by it. If all the inquired mobile node(s) is not managed by it, the home agent conducts no processing. Otherwise, if there is any mobile node managed by it, the home agent directly transmits to the application service node a response message that includes information on the mobile node(s) and information on the home agent(s) attached by the mobile node(s).

### Embodiment 3 (not covered by the present invention as defined by the claims)

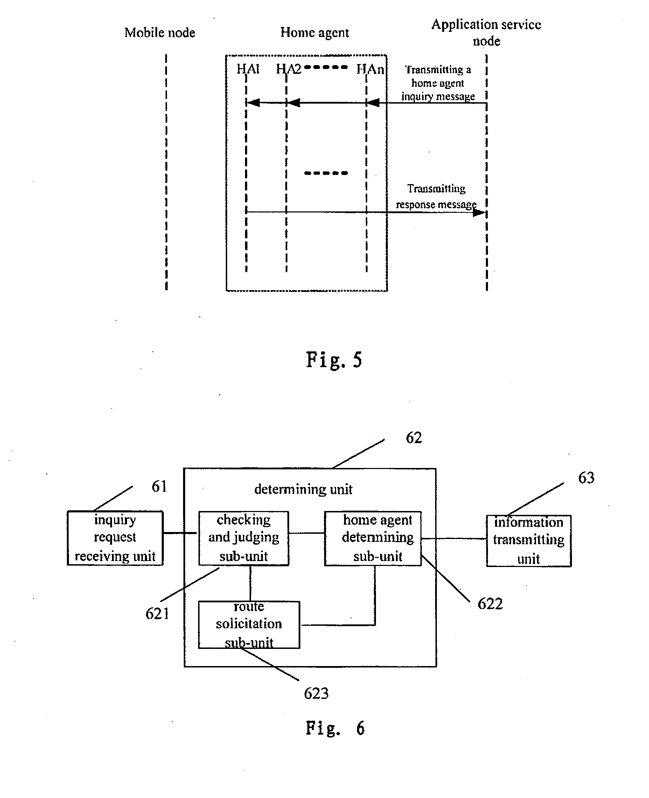

When the application service node (e.g. AAAH server, location server and the like) transmits an inquiry message to the home agent, a home agent's multicast address is used as the destination address. Thus, each of home agents in the mobile node home network receives the inquiry message, if there is any mobile node (MN) managed by it in the inquiry message, the home agent directly returns a response message to the application service node. The specific implementation process is shown in Fig. 5, which includes the following steps:

Step 501: The application service node transmits to a home agent (HA) in the mobile node's home network a home agent inquiry message that includes information on one or more mobile nodes to be inquired and the destination address of the inquiry message is a home agent's multicast address. Each of home agents in the mobile node home network receives the inquiry message because the destination address of the inquiry message is a home agent's multicast address.

Step 502: After receiving the inquiry message, each of the home agents checks whether there is any of the mobile node(s) in the inquiry message that is managed by it. If there is a mobile node managed by it, the home agent transmits the application service node a response message that includes information on the mobile node(s) and information on the home agent(s) attached by the mobile node(s).

In addition, the present invention also provides an apparatus for determining home agent attached by mobile node, structure of which is shown in Fig. 6. The apparatus may be built in a home agent or in a network independently. The apparatus specifically includes an inquiry request receiving unit 61, a determining unit 62 and an information transmitting unit 63. The inquiry request receiving unit 61 receives a request for inquiring home agent(s) attached by mobile node(s), the determining unit 62 determines the home agent(s) attached by the inquired mobile node(s) based on the received request for inquiring home agent(s) attached by mobile node(s), and the information transmitting unit 63 transmits information on the determined home agent(s) attached by the mobile node(s).

The determining unit 62 includes a checking and judging sub-unit 621, a route solicitation sub-unit 622 and a home agent determining sub-unit 623. The checking and judging sub-unit 621 checks and judges whether the inquired mobile node(s) in the request for inquiring home agent(s) attached by mobile node(s) is managed by this home agent, and transmits the home agent determining sub-unit a judging result indicating that the inquired mobile node(s) is managed by this home agent and the route solicitation sub-unit a judging result indicating that the inquired mobile node(s) is not managed by this home agent. The route solicitation sub-unit 622 transmits, based on the judging result, a router solicitation message over a home link to notify each of other home agents in the mobile node home network of checking whether the inquired mobile node(s) is managed by the home agent and transmit the home agent determining sub-unit a checking result indicating that the inquired mobile node(s) is not managed by the home agent. The home agent determining sub-unit 623 determines the home agent(s) attached by the mobile node(s) based on the judging results.

Refer to the implementation processes of steps of the above-mentioned method for functions and roles of the units in the apparatus and they will not be further described herein.

As can be seen, embodiments of the present invention provide a new solution for an application service node to inquire the home agent(s) attached by the mobile node(s) in which the concerned application service node and home agent both are managed by a same carrier, hence there is a higher dependable degree of apparatuses. In order to enhance security, an IPsec security association may be established between the application service node and the home agent. Thus, the possibility of being cheated and attacked by a mobile node during direct interaction with the mobile node is effectively avoided. Limiting all signaling inside the carries's network and using IPsec for encryption transmission prevents signaling messages from being intercepted, tampered, forged and attacked. At the same time, the efficiency of inquiry is improved and the load of network and devices is reduced because the home agent(s) attached by a plurality of mobile nodes may be inquired in one message.

What is described above is only exemplary embodiments of the present invention. It should be noted that for those skilled in the art, various improvements and modifications may also be made without departing from the principle of the present invention and these improvements and modifications should also be regarded as within the scope of the present invention as defined by the appended claims.

## Claims

1. A method for determining to which home agent of a plurality of home agents in the home network is attached a mobile node, comprising:
receiving, by a home agent in a mobile node home network, an inquiry message, wherein the inquiry message is transmitted by an application service node for inquiring home agent is attached to which a mobile node; and
returning a response message to the application service node if the inquired mobile node is managed by the home agent; and **characterised by**
using a router solicitation message to notify the inquiry to other home agents in the mobile, node home network if the inquired mobile node is not managed by the home agent.

2. The method according to claim 1, **characterized in that** the inquiry message comprises information on one or more mobile nodes to be inquired that belongs to a same mobile node home network.

3. The method according to claim 1 or 2, **characterized in that** a destination address of the inquiry message is a home agent's anycast address.

4. An apparatus for determining to which home agent of a plurality of home agents in the home network is attached a mobile node, comprising:
means (61) for receiving an inquiry message, wherein the inquiry message is transmitted by an application service node for inquiring home agent is attached to which a mobile node, and
means (62) for returning a response message if the inquired mobile node is managed by the home agent; and **characterised by**
means (623) or using a router solicitation message to notify the inquiry to other home agents in the mobile node home network if the inquired mobile node is not managed by the home agent.

5. The apparatus according to claim 4, wherein a destination address of the inquiry message is a home agent's anycast address.

## Patentansprüche

1. Verfahren zum Bestimmen, an welchen Heimatagenten von mehreren Heimatagenten in dem Heimatnetz ein Mobilknoten angeschlossen ist, mit den folgenden Schritten:
Empfangen einer Anfragenachricht durch einen Heimatagenten in einem Mobilknoten-Heimatnetz, wobei die Anfragenachricht durch einen Anwendungsdienstknoten gesendet wird, um anzufragen, an welchen Heimatagenten ein Mobilknoten angeschlossen ist; und
Zurückgeben einer Antwortnachricht an den Anwendungsdienstknoten, wenn der befragte Mobilknoten durch den Heimatagenten verwaltet wird; und **gekennzeichnet durch**
Verwenden einer Routeraufforderungsnachricht, um die Anfrage anderen Heimatagenten in dem Mobilknoten-Heimatnetz anzukündigen, wenn der befragte Mobilknoten nicht **durch** den Heimatagenten verwaltet wird.

2. Verfahren nach Anspruch 1, **dadurch gekennzeichnet, dass** die Anfragenachricht Informationen über einen oder mehrere zu befragende Mobilknoten umfasst, die zu einem selben Mobilknoten-Heimatnetz gehören.

3. Verfahren nach Anspruch 1 oder 2, **dadurch gekennzeichnet, dass** eine Zieladresse der Anfragenachricht die Anycast-Adresse eines Heimatagenten ist.

4. Vorrichtung zum Bestimmen, an welchen Heimatagenten von mehreren Heimatagenten in dem Heimatnetz ein Mobilknoten angeschlossen ist, umfassend:
ein Mittel (61) zum Empfangen einer Anfragenachricht, wobei die Anfragenachricht durch einen Anwendungsdienstknoten gesendet wird, um anzufragen, an welchen Heimatagenten ein Mobilknoten angeschlossen ist; und
ein Mittel (62) zum Zurückgeben einer Antwortnachricht, wenn der befragte Mobilknoten durch den Heimatagenten verwaltet wird; und **gekennzeichnet durch** ein Mittel (623) zum Verwenden einer Routeraufforderungsnachricht, um die Anfrage anderen Heimatagenten in dem Mobilknoten-Heimatnetz anzukündigen, wenn der befragte Mobilknoten nicht **durch** den Heimatagenten verwaltet wird.

5. Vorrichtung nach Anspruch 4, wobei eine Zieladresse der Anfragenachricht die Anycast-Adresse eines Heimatagenten ist.

## Revendications

1. Procédé destiné à déterminer à quel agent de rattachement d'une pluralité d'agents de rattachement dans le réseau de rattachement est relié un noeud mobile, comprenant :
la réception, par un agent de rattachement dans un réseau de rattachement de noeuds mobiles, d'un message d'interrogation, le message d'interrogation étant transmis par un noeud de service d'application pour interroger à quel agent de rattachement est relié un noeud mobile ; et
le renvoi d'un message de réponse au noeud de service d'application si le noeud mobile interrogé est géré par l'agent de rattachement ; et **caractérisé par** l'utilisation d'un message de sollicitation de routeur pour notifier l'interrogation à d'autres agents de rattachement dans le réseau de rattachement de noeuds mobiles si le noeud mobile interrogé n'est pas géré par l'agent de rattachement.

2. Procédé selon la revendication 1, **caractérisé en ce que** le message d'interrogation comprend des informations sur un ou plusieurs noeuds mobiles à interroger qui appartiennent à un même réseau de rattachement de noeuds mobiles.

3. Procédé selon la revendication 1 ou 2, **caractérisé en ce qu'**une adresse destinataire du message d'interrogation est une adresse d'envoi à la cantonade d'un agent de rattachement.

4. Appareil destiné à déterminer à quel agent de rattachement d'une pluralité d'agents de rattachement dans le réseau de rattachement est relié un noeud mobile, comprenant :
un moyen (61) pour recevoir un message d'interrogation, le message d'interrogation étant transmis par un noeud de service d'application pour interroger à quel agent de rattachement est relié un noeud mobile ; et
un moyen (62) pour renvoyer un message de réponse si le noeud mobile interrogé est géré par l'agent de rattachement ; et **caractérisé par**
un moyen (623) pour utiliser un message de sollicitation de routeur pour notifier l'interrogation à d'autres agents de rattachement dans le réseau de rattachement de noeuds mobiles si le noeud mobile interrogé n'est pas géré par l'agent de rattachement.

5. Appareil selon la revendication 4, dans lequel une adresse destinataire du message d'interrogation est une adresse d'envoi à la cantonade d'un agent de rattachement.
